# EUROPÄISCHE PATENTANMELDUNG

(11) **EP 2 133 172 A1**
(43) Veröffentlichungstag der Anmeldung: **16.12.2009**
(21) Anmeldenummer: 09005534.4
(22) Anmeldetag: 20.04.2009
(51) Int. Cl.: B23Q 1/28, F16B 41/00

(54) **Aufnahme**

(30) Priorität: 10.06.2008 DE 102008027529
(71) Anmelder: Frenotech Establishment, 9494 Schaan (LI)
(72) Erfinder: Mainardi, Gianfranco, 9444 Diepoldsau (CH)
(74) Vertreter: Säger, Manfred

(57) **Zusammenfassung**

Eine Aufnahme für eine die Führungsstange einer Linearbewegungseinheit bremsenden Feststellvorrichtung, wobei die Aufnahme zwischen der Linearbewegungseinheit und einem weiteren, an ihr festzulegenden Bauteil anzuordnen ist, mit einer Hohlzylinderausnehmung zur Aufnahme der Feststellvorrichtung, mit zumindest zwei rechtwinklig zu der Achse der Hohlzylinderausnehmung verlaufenden, an der ersten Anbauseite zu der Linearbewegungseinheit mündenden Bohrungen zum Durchtritt von in die Linearbewegungseinheit einschraubbaren, Befestigungsschrauben mit einem Kopf und ggf. mit zwei an der bezüglich der ersten Anbauseite entgegegengesetzt angeorneten zweiten Anbauseite mündenden Gewindebohrungen, kennzeichnet sich dadurch aus, dass die Bohrung einen zur Aufnahme des Kopfes der Befestigungsschraube von der ersten Anbauseite angepassten grossen Durchmesser aufweist, dass die Bohrung mit einem quer zu ihrer Erstreckung verlaufenden, nach aussen offenen Einschnitt zur Aufnahme einer Unterlagscheibe versehen ist und dass die Bohrung diesen grossen Durchmesser auf einer von dem offenen Einschnitt gemessenen, zumindest der gesamten Länge der Befestigungsschraube einschliesslich deren Kopf entsprechenden Tiefe und eine in sie mit dem Kopf von der ersten Anbauseite eingesetzte und mit der in den Einschnitt eingesetzten Unterlagscheibe gegen Herausfallen gesicherte Befestigungsschraube aufweist.

## Beschreibung

Die Erfindung betrifft eine gattungsgemässe Aufnahme nach dem Oberbegriff des Hauptanspruchs, nämlich eine Aufnahme für eine die Führungsstange einer Linearbewegungseinheit bremsenden Feststellvorrichtung, wobei die Aufnahme zwischen der Linearbewegungseinheit und einem weiteren, an ihr festzulegenden Bauteil anzuordnen ist, mit einer Hohlzylinderausnehmung (6) zur Aufnahme der Feststellvorrichtung, mit zumindest zwei rechtwinklig zu der Achse der Hohlzylinderausnehmung (6) verlaufenden, an der ersten Anbauseite zu der Linearbewegungseinheit mündenden Bohrungen zum Durchtritt von in die Linearbewegungseinheit einschraubbaren, Befestigungsschrauben mit einem Kopf und ggf. mit zwei an der bezüglich der ersten Anbauseite entgegegengesetzt angeorneten zweiten Anbauseite mündenden Gewindebohrungen.

Solche Aufnahmen sind in einer Vielzahl von Ausführungsformen für die Führungsstange von Linearbewegungseinheiten bremsenden Feststellvorrichtung (DE 40 12 524 A1) bekannt. Diese weisen einen die Führungsstange etwa konzentrisch umgebenden zylindrischen Bereich mit der rechtwinklig dazu verlaufenden Hohlzylinderausnehmung zur Aufnahme der Feststellvorrichtung und an dessen beiden Enden über diesen zylindrischen Bereich hervorstehende, als Flansche ausgebildete erste sowie zweite Anbauseiten auf. Die an der ersten Anbauseite zu der Linearbewegungseinheit vorgesehenen Bohrungen zum Durchtritt von in die Linearbewegungseinheit einschraubbaren Befestigungsschrauben münden auf der Rückseite des ersten Flansches ausserhalb des die Führungsstange konzentrisch umgebenden zylindrischen Bereiches, weil es bislang nur so möglich ist, die Befestigungsschraube einzusetzen und die Aufnahme mit ihr an der Linearbewegungseinheit anzuschrauben, wozu in der Regel vier an den Ecken des ersten Flansches vorgesehene Befestigungsschrauben verwendet werden.

Der zwischen den beiden Flanschen vorgesehene zylindrische Bereich macht die Hestellung der Aufnahme aufwendig. Zugleich weist deswegen die Hohlzylinderausnehmung geringe Wandstärken auf.

Der Erfindung liegt deshalb die Aufgabe zugrunde, eine gattungsgemässe Aufnahme einfacher und stabiler auszubilden.

Diese Aufgabe wird bei einer gattungsgemässen Aufnahme nach dem Oberbegriff des Hauptanspruchs erfindungsgemäss durch dessen kennzeichnende Merkmale, also dadurch gelöst, dass die Bohrung einen zur Aufnahme des Kopfes der Befestigungsschraube von der ersten Anbauseite angepassten grossen Durchmesser aufweist, dass die Bohrung mit einem quer zu ihrer Erstreckung verlaufenden, nach aussen offenen Einschnitt zur Aufnahme einer Unterlagscheibe versehen ist und dass die Bohrung diesen grossen Durchmesser auf einer von dem offenen Einschnitt gemessenen, zumindest der gesamten Länge der Befestigungsschraube einschliesslich deren Kopf entsprechenden Tiefe und eine in sie mit dem Kopf von der ersten Anbauseite eingesetzte und mit der in den Einschnitt eingesetzten Unterlagscheibe gegen Herausfallen gesicherte Befestigungsschraube aufweist.

Mit der Erfindung wird also eine Aufnahme bereitgestellt, an der also die Befestigungsschrauben schon gegen Herausfallen gesichert vorgesehen sind, sodass sie nicht nachträglich erst angebracht werden müssen und sich das Anschrauben an die Linearbewegungseinheit einfach gestaltet.

Es ist ferner zweckmässig, wenn die mit der in den Einschnitt eingesetzten Unterlagscheibe gegen Herausfallen gesicherte Befestigungsschraube auf ihrem das Schraubgewinde aufweisenden Schaft mit einem das vollständige Hineinrutschen in den Bereich der Bohrung mit dem grossen Durchmesser verhindernden Spreng- oder O-Ring versehehen ist.

Ausserdem ist es dadurch mit Vorteil möglich, die Aufnahme als Quader auszubilden, was dazu führt, dass nicht, wie beim Stand der Technik eine zylindrische Ausbildung zwischen den beiden Flanschen notwendig ist, sodass infolgedessen dickere Wandstärken im Bereich der Hohlzylinderausnehmung möglich sind.

Weiter zweckmässige Ausgestaltungen und Weiterbildungen der Erfindung sind in den restlichen Unteransprüchen gekennzeichnet.

Ein Ausführungsbeispiel der Erfindung wird nachfolgend unter Bezugnahme au die Zeichnungnnäher erläutert. In dieser zeigt:

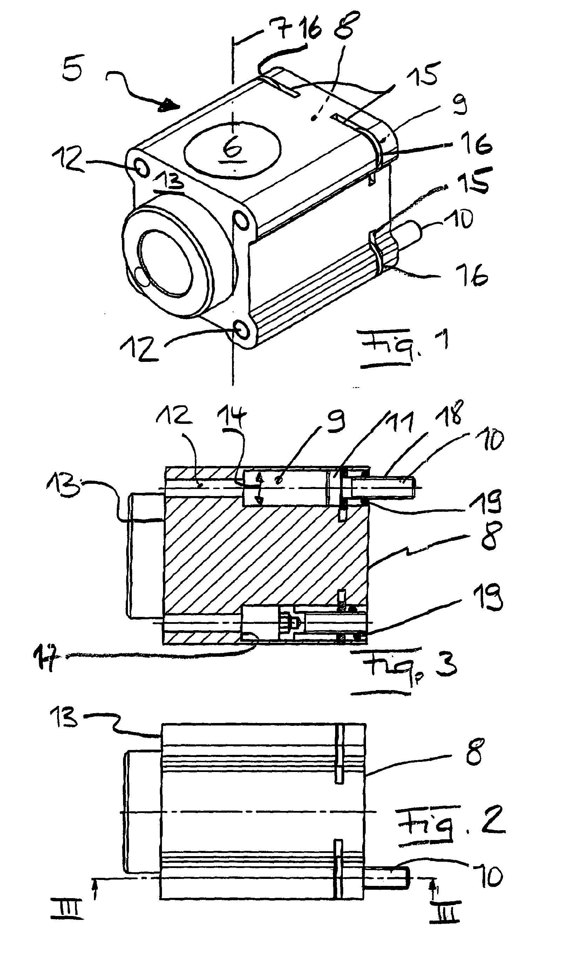

- Figur 1: die Aufnahme, in perspektivischer Ansicht
- Figur 2: die Aufnahme gemäss Figur 1, in Seitenansicht und
- Figur 3: einen Schnitt III-III nach Figur 2.

Die im wesentlichen quaderförmige Aufnahme 5 dient für eine die Führungsstange einer Linearbewegungseinheit (beides nicht gezeigt) bremsenden Feststellvorrichtung. Die Aufnahme ist dabei zwischen der Linearbewegungseinheit und einem weiteren, an ihr festzulegenden Bauteil anzuordnen.

Die Aufnahme 5 und ist mit einer Hohlzylinderausnehmung 6 zur Aufnahme der (nicht dargestellten) Feststellvorrichtung und mit zumindest zwei rechtwinklig zu der Achse 7 der Hohlzylinderausnehmung verlaufenden, an der ersten Anbauseite 8 zu der Linearbewegungseinheit mündenden Bohrungen 9 zum Durchtritt von in die Linearbewegungseinheit einschraubbaren Befestigungsschrauben 10 mit einem Kopf 11 versehen. Infolge der quaderförmigen Ausbildung sind dickere Wandstärken im Bereich der Hohlzylinderausnehmung möglich. An der bezüglich der ersten Anbauseite 8 entgegegengesetzt angeordneten zweiten Anbauseite 13 münden zwei Gewindebohrungen 12.

Die Bohrungen 9 weisen einen zur Aufnahme des Kopfes 11 der Befestigungsschraube 10 von der ersten Anbauseite 8 angepassten grossen Durchmesser 14 auf und sind als abgesetzte Durchgangsbohrungen ausgebildet, die mit der an der zweiten Anbauseite 13 mündenden Gewindebohrung 12 fluchten. Deren Kerndurchmesser der ist an den Durchmesser des Werkzeuges zum Schrauben der an dem Kopf 11 der Befestigungsschraube 10 angepasst.

Die Bohrung 9 ist mit einem quer zu ihrer Erstreckung verlaufenden, nach aussen offenen Einschnitt 15 zur Aufnahme einer Unterlagscheibe 16 versehen, nachdem die Befestigungsschraube 10 mit ihrem Kopf 11 voran von der ersten Anbauseite 8 her eingesetzt worden ist. Dabei muss die Bohrung 9 den grossen Durchmesser 14 auf einer von dem offenen Einschnitt 16 bis zu dem Absatz 17 der der abgesetzte Durchgangsbohrung Tiefe aufweisen, die der gesamten Länge der Befestigungsschraube 10 einschliesslich deren Kopf 11 entspricht. Die Unterlagscheibe 16 sichert dabei die Befestigungsschraube 10 gegen Herausfallen.

Zusätzlich ist die mit der in den Einschnitt 15 eingesetzten Unterlagscheibe 16 gegen Herausfallen gesicherte Befestigungsschraube 10 auf ihrem das Schraubgewinde aufweisenden Schaft 18 mit einem das vollständige Hineinrutschen in die Bohrung 9 verhindernden O-Ring 19 versehehen.

Mit der Erfindung wird also eine Aufnahme 5 bereitgestellt, an der also die Befestigungsschrauben 10 sowohl gegen Herausfallen als auch gegen das HIneinrutschen gesichert vorgesehen sind, sodass sie nicht nachträglich erst angebracht werden müssen und sich das Anschrauben an die Linearbewegungseinheit einfach gestaltet.

## Patentansprüche

1. Aufnahme (5) für eine die Führungsstange einer Linearbewegungseinheit bremsenden Feststellvorrichtung, wobei die Aufnahme (5) zwischen der Linearbewegungseinheit und einem weiteren, an ihr festzulegenden Bauteil anzuordnen ist, mit einer Hohlzylinderausnehmung (6) zur Aufnahme (5) der Feststellvorrichtung, mit zumindest zwei rechtwinklig zu der Achse der Hohlzylinderausnehmung (6) verlaufenden, an der ersten Anbauseite (8) zu der Linearbewegungseinheit mündenden Bohrungen (9) zum Durchtritt von in die Linearbewegungseinheit einschraubbaren Befestigungsschrauben (10) mit einem Kopf (11) und ggf. mit zwei an der bezüglich der ersten Anbauseite (8) entgegegengesetzt angeorneten zweiten Anbauseite (13) mündenden Gewindebohrungen (12), **dadurch gekennzeichnet, dass** die Bohrung (9) einen zur Aufnahme (5) des Kopfes (11) der Befestigungsschraube (10) von der ersten Anbauseite (8) angepassten grossen Durchmesser (14) aufweist, dass die Bohrung (9) mit einem quer zu ihrer Erstreckung verlaufenden, nach aussen offenen Einschnitt (15) zur Aufnahme (5) einer Unterlagscheibe (16) versehen ist und dass die Bohrung (9) diesen grossen Durchmesser (14) auf einer von dem offenen Einschnitt (15) gemessenen, zumindest der gesamten Länge der Befestigungsschraube (10) einschliesslich deren Kopf (11) entsprechenden Tiefe und eine in sie mit dem Kopf (11) von der ersten Anbauseite (8) eingesetzte und mit der in den Einschnitt (15) eingesetzten Unterlagscheibe (16) gegen Herausfallen gesicherte Befestigungsschraube (10) aufweist.

2. Aufnahme (5) nach Anspruch 1, **dadurch gekennzeichnet, dass** die mit der in den Einschnitt (15) eingesetzten Unterlagscheibe (16) gegen Herausfallen gesicherte Befestigungsschraube (10) auf ihrem das Schraubgewinde aufweisenden Schaft (18) mit einem das vollständige Hineinrutschen in die Bohrung (9) verhindernden Spreng- oder O-Ring (19) versehehen ist.

3. Aufnahme (5) nach Anspruch 1 oder 2, **dadurch gekennzeichnet, dass** die Bohrung (9) als abgesetzte (17) Durchgangsbohrung ausgebildet ist, die mit der an der zweiten Anbauseite (13) mündenden Gewindebohrung (12) fluchtet.

4. Aufnahme (5) nach Anspruch 3, **dadurch gekennzeichnet, dass** der Kerndurchmesser der Gewindebohrung (12) an den Durchmesser des Werkzeuges zum Schrauben der Befestigungsschraube (10) angepasst ist.

5. Aufnahme (5) nach einem der vorhergehenden Ansprüche, **gekennzeichnet durch** eine Ausbildung als Quader.
